# EUROPÄISCHE PATENTSCHRIFT

(11) **EP 1 441 887 B1**
(45) Veröffentlichungstag und Bekanntmachung des Hinweises auf die Patenterteilung: **16.05.2018**
(21) Anmeldenummer: 02779495.7
(22) Anmeldetag: 17.10.2002
(51) Int. Cl.: B22C 3/00, C09C 1/30

(54) **ANTIADHÄSIV BESCHICHTETE FORMWERKZEUGE**
ANTI-ADHESIVELY COATED FORMING TOOLS
OUTILS DE MOULAGE POURVUS D'UN REVETEMENT ANTI-ADHESIF

(30) Priorität: 29.10.2001 DE 10153352
(43) Veröffentlichungstag der Anmeldung: 04.08.2004
(73) Patentinhaber: Momentive Performance Materials GmbH, 51368 Leverkusen (DE)
(72) Erfinder: HEILIG, Gerhard, 51467 Bergisch Gladbach (DE); GROSS, Thomas, 42929 Wermelskirchen (DE); STEINBERGER, Helmut, 51375 Leverkusen (DE)
(74) Vertreter: Gille Hrabal
(86) Internationale Anmeldenummer: PCT/EP2002/011612
(87) Internationale Veröffentlichungsnummer: WO 2003/037593

(56) Entgegenhaltungen:
- EP-A- 1 000 989
- WO-A-00/69976
- JP-A- 2000 191 786
- US-A- 3 986 997
- US-A- 4 532 096

## Beschreibung

Die Erfindung betrifft antiadhäsiv beschichtete Formwerkzeuge, Verfahren zu ihrer Herstellung und ihre Verwendung zur Herstellung von Kunststoff-Formteilen, insbesondere Formteilen aus Polyurethanschaum.

Kunststoff-Formteile werden üblicherweise in Kunststoffformen (z.B. aus Kunstharz oder Epoxidharz) oder Metallformen (Z.B. aus Stahl oder Aluminium) hergestellt. Um das Formteil oder anhaftende Produktreste nach der Herstellung aus diesen Formen problemlos, rückstands- und zerstörungsfrei entnehmen oder entfernen zu können, wird die Form vor dem Eintrag der Rohstoffe in der Regel mit einem Trennmittel beschichtet.

Es ist bekannt, dass bei der Produktion von Formteilen, z.B. aus Polyurethanen (PUR), dabei mit Vorteil wachsartige Substanzen als Trennmittel verwendet werden. Diese Trennmittel werden in einem gesonderten Arbeitsgang, z. B. als reines Wachs durch Einreiben oder Einpinseln des Formwerkzeuges aufgetragen. Üblich und weit verbreitet ist auch der Eintrag mittels Sprühauftrag, bei dem das Wachs in Lösemitteln emulgiert und/oder gelöst, fein vernebelt auf die formgebende Oberfläche des Formwerkzeuges aufgetragen wird, um einen geschlossenen, gleichmäßigen Oberflächenfilm zu erzeugen.

Je nach Art der zu verarbeitenden Rohstoffe und/oder des Herstellungsverfahrens lassen sich mit solchen Trennmitteln unterschiedlich konturscharfe und rückstandsarme Entformungen durchführen. Das Formwerkzeug muss dabei sehr häufig vor der Herstellung jedes einzelnen Formteiles mit dem Trennmittel behandelt werden, um nach der Herstellung eine einwandfreie Entformung zu gewährleisten.

Bei den für PUR üblichen Verarbeitungstechniken handelt es sich um eine in dem Formwerkzeug ablaufende komplexe chemische Reaktion, bei der die PUR-Komponenten, das Polyol und das Isocyanat in einer Polyadditionsreaktion reagieren. Parallel mit dem Ablauf der chemischen Reaktion geht die Formgebung einher. Alle verwendeten Ausgangsstoffe wie auch alle Reaktionszwischenprodukte wirken dabei auf die Oberfläche des Formwerkzeuges ein. Das entstehende PUR-Formteil zeigt dabei auf den üblicherweise im Formwerkzeugbau verwendeten Metallen oder Kunststoffen eine gute bis sehr gute Haftung, die eine saubere Entformung erschwert bis unmöglich macht. Insbesondere bei der Formverarbeitung von PUR ist daher die Verwendung von Trennmitteln in der Regel unerlässlich.

Es ist bekannt, dass bei der Herstellung von harten PUR-Formteilen auf die Verwendung von Trennmitteln dann verzichtet werden kann, wenn dem PUR-Rohstoffgemisch besondere Wirkstoffe zugesetzt werden, die zu einem Selbsttrenneffekt führen (IMR - In-Mold-Release). Diese Methode ist jedoch nur in speziellen Fällen anwendbar. Insbesondere bei der Herstellung von PUR-Weichformschäumen ist diese Technologie aufgrund der chemischen Natur der Agenzien nicht anwendbar, so dass in diesem Bereich in jedem Fall mit Trennmitteln gearbeitet werden muss.

Weiterhin ist verschiedentlich versucht worden, die Verwendung von Trennmitteln durch Auftragen (semi-)permanenter Beschichtungen, beispielsweise aus Polytetrafluorethylen (PTFE), auf die Formwerkzeuge zu vermeiden. Diese Beschichtungen sind jedoch gegenüber den handelsüblichen Trennmitteln nicht kostenneutral. Des weiteren sind insbesondere Reparaturen beschädigter (semi-)permanenter Oberflächenfilme nur mit viel Aufwand möglich und in der Regel nicht vor Ort durchführbar.

Die wiederholte Auftragung von Trennmitteln auf die Formwerkzeugoberfläche hat aber eine Reihe von chemischen, technischen, ökologischen und ökonomischen Nachteilen.
Das Eintrennen von Formwerkzeugen stellt in einer Produktion unerwünschten zusätzlichen Arbeitsaufwand und zusätzliche Arbeitskosten dar. Je nach Häufigkeit und dabei verwendeter Trennmittelmenge entstehen vielfach hohe zusätzliche Hilfsstoffkosten.
Insbesondere beim Aufsprühen des Trennmittels auf die Formwerkzeugoberfläche ist aus arbeitshygienischen Gründen eine wirksame Entlüftung des Arbeitsplatzes und ein wirksamer Atemschutz für den Verarbeiter erforderlich, wobei dieses insbesondere bei großen Formwerkzeugen erheblichen technischen und investiven Aufwand erfordert.
Trennmittel erfordern nach Aufbringung auf die Oberfläche eine Trockenzeit zur Verdampfung des Lösemittels, bevor die zu verarbeitenden Rohstoffe in das Formwerkzeug eingetragen werden können. Andernfalls stört das verbliebene Lösemittel die Verarbeitung des Formteils.
Trennmittel enthalten neben den Wachsen und Lösemitteln sehr oft Hilfsstoffe, wie z.B. Detergentien, die während der Rohstoffverarbeitung auf die physikalisch-chemischen Formgebungs- und Reaktionsabläufe einwirken und dadurch die resultierenden Formteileigenschaften negativ beeinflussen können.
Das Trennmittel wird in der Regel von Hand aufgetragen, was zu einer unregelmäßigen Oberfläche führt und eine exakte Kontrolle der Einsatzmenge erschwert. Bei ungleichmäßigem Auftrag des Trennmittels können Formteilreste an schlecht benetzten Oberflächenstellen bei der Entformung hängen bleiben.
Bei jeder Entformung bleiben Reste des Trennmittels an Formteil und Formwerkzeugoberfläche haften- Auf der Formwerkzeugoberfläche entsteht mit der Zeit ein meist ungeregelter Aufbau einer Trennmittelschicht. Diese Schicht stört die Konturgenauigkeit und zwingt den Anwender zu umständlichen und kostenintensiven Reinigungsprozeduren, die je nach Beanspruchung in z. T. sehr kurzen Zeitabständen (wöchentlich) durchgeführt werden müssen.
Formteile benötigen vor der Weiterverarbeitung oft eine nachträgliche separate Reinigung.
   - Trennmittelreste führen insbesondere beim Sprühauftrag zu einer starken Verschmutzung des Arbeitsplatzes.

Es wurde nun gefunden, dass eine Beschichtung der Formwerkzeugoberfläche mit einem nanoskaliges kolloidales Siliziumdioxid und/oder kolloidales Alkylsilsesquioxan in wässrig-alkoholischer Suspension enthaltenden Beschichtungsmaterial zu Formoberflächen führt, die die obengenannten Nachteile eliminiert und zu einer wesentlichen Vereinfachung der Formteilherstellung in einem Formwerkzeug beiträgt.

Diese (semi-)permanente Beschichtung der Formwerkzeugoberfläche hat folgende Vorteile:
- Sie erfordert geringe Einsatzmengen.
- Ihre Aufbringung ist zeitsparend und kostengünstig.
- Die Beschichtung ist konturgenau.
- Die Beschichtung aller beim Formwerkzeugbau üblichen Materialien ist möglich.
- Die Temperaturführung des Formwerkzeuges wird nicht beeinflusst
- Sie überdauert eine Vielzahl von Produktionszyklen ohne Nachbearbeitung. .Es entfällt die für das Eintrennen notwendige Arbeitszeit.
- Besondere Arbeitsplatzlüftungen und andere arbeitshygienische Maßnahmen können entfallen.
- Die zyklischen Ablüft- und Trockenzeiten zum Verdampfen des Lösemittels entfallen.
- Die Reinigungszyklen können erheblich verlängert werden.
- Die Beschichtung ist chemisch inert und beeinflusst den Prozess der Formteilherstellung nicht.
- Bei gleichmäßigern Auftrag besteht keine Gefahr der partiellen Formteilhaftung.
- Die Beschichtung bleibt vollständig auf der Formwerkzeugoberfläche haften.
- Eine nachträgliche Reinigung des Formteils ist nicht erforderlich.
- Es entsteht kein Aufbau von Trennmittelresten in dem Formwerkzeug.
- Eine Ausbesserung beschädigter Beschichtungen ist mit geringem Aufwand vor Ort möglich.
- Eine Verschmutzung des Arbeitsplatzes durch Trennmittelreste wird vermieden.

Über diese Vorteile hinaus kann die Beschichtung eingefärbt werden, was (a) eine einfache farbliche Differenzierung verschiedener Formwerkzeug(teil)e, und/oder (b) eine einfache Sichtprobe zur Feststellung etwaiger Oberflächenbeschädigungen zulässt.

JP2000191786 offenbart ein Formwerkzeug, das eine antiadhäsive Beschichtung ("mould release agent") auf Basis organomodifizierter nanoskaliger SiO₂ -Teilchen aufweist.

Gegenstand der vorliegenden Erfindung sind somit Formwerkzeuge für die Kunststoffverarbeitung, die eine Antiadhäsiv-Beschichtung auf Basis organomodifizierter nanoskaliger SiO₂-Teilchen aufweisen, wie im Patentanspruch 1 definiert. Diese können hergestellt werden durch Beschichtung von Formwerkzeugen aus Metall oder Kunststoffen mit einem Beschichtungsmittel, das nanoskaliges kolloidales Siliziumdioxid und/oder kolloidales Alkylsilsesquioxan in wässrig-alkoholischer Suspension enthält, und anschliessende Aushärtung der Beschichtung. Die ausgehärtete Beschichtung enthält neben Siliziumdioxid auch partiell organisch substituierte Silikatstrukturen, die durch Reaktion von tetrafunktionelle Siliziumatome enthaltenden SiO₂-Partikeln mit organofunktionellen Trialkoxysilanen entstehen.

Das Beschichtungsmittel wird hergestellt durch Umsetzung von:
a) kolloidalen Siliziumdioxid-Lösungen mit einer mittleren Teilchengröße von 5 bis 150, bevorzugt 10 bis 30 Nanometern Durchmesser;
b) organofunktionellen Trialkoxysilanen der allgemeinen Formel R'-Si(OR)₃, worin R' einen, gegebenenfalls fluorierten, Alkylsubstituenten mit 1 bis 6 Kohlenstoffatomen, Vinyl-, Acryloyl-, Methacryloyl-, γ-Glycidoxypropyloder γ-Methacryloxypropyl-Substituenten, bevorzugt einen Methyl-, Ethyl-, Acryloyl-, Methacryloyl-, oder Fluoralkyl-Substituenten mit 1 bis 6 Kohlenstoffatomen, besonders bevorzugt einen Methyl-, Methacryloyl-, 3,3,3-Trifluorpropyl-, Nonafluorbutyl- oder Tridekafluorhexyl-Substituenten bedeutet und R ein Alkylsubstituent mit 1 bis 8 Kohlenstoffatomen, bevorzugt ein Methyl-, Ethyl-, Isopropyl- oder sek-Butylsubstituent ist. Es können auch unterschiedliche Substituenten R in einem Trialkoxysilan vorliegen. Weiterhin können auch Mischungen verschiedener Trialkoxysilane eingesetzt werden.
c) den pH-Wert regulierenden Zusätzen;
d) einem Katalysator.

Ausgangskomponente a) bei der Herstellung der erfindungsgemäß verwendeten Beschichtungsmittel sind wässrige kolloidale Siliziumdioxid-Lösungen mit einer mittleren Teilchengröße von 5 bis 150 Nanometern Durchmesser. Vorzugsweise werden Siliziumdioxid-Dispersionen mit einer mittleren Teilchengröße von 10 bis 30 Nanometern eingesetzt, um Dispersionen mit guter Stabilität zu erhalten. Diese Siliziumdioxid-Dispersionen werden nach bekannten Verfahren hergestellt und sind kommerziell erhältlich. Dispersionen von kolloidalem Siliziumdioxid sind von verschiedenen Herstellern wie DuPont, Nalco Chemical Company oder der Bayer AG zu beziehen. Kolloidale Dispersionen von Siliziumdioxid sind entweder in saurer oder alkalischer Form erhältlich. Für die Herstellung der Beschichtungsmaterialien wird vorzugsweise die saure Form verwendet, da diese bessere Eigenschaften der Beschichtungen liefern als die alkalischen Formen.

Ausgangskomponente b) besteht zu mindestens 70 Gew.-% aus Trialkoxyalkylsilan, bevorzugt Trialkoxyalkylsilan Trialkoxymethylsilan, Trialkoxyethylsilan oder Trialkoxypropylsilan, besonders bevorzugt Trialkoxymethylsilan.

Ausgangskomponente c) bei der Herstellung der erfindungsgemäß verwendeten Beschichtungsmittel sind den pH-Wert regulierende Zusätze. In der Regel handelt es sich dabei um anorganische oder organische Säuren. Die Mischungen enthalten ausreichende Mengen Säure, um den pH-Wert bei der Umsetzung in einem Bereich zwischen 3,0 und 6,0 zu halten. Der pH-Wert wird in diesem Bereich gehalten, um ein vorzeitiges Kondensieren und Gelieren der Mischung zu vermeiden, um die Lagerfähigkeit der Mischung zu verlängern, sowie um optimale Eigenschaften der Zusammensetzung nach Härtung zu erhalten. Geeignete Säuren sind sowohl organische als auch anorganische Säuren wie Chlorwasserstoffsäure, Chloressigsäure, Essigsäure, Zitronensäure, Benzoesäure, Ameisensäure, Propionsäure, Maleinsäure, Oxalsäure, Glycolsäure und ähnliche. Die Säure wird bevorzugt entweder dem Trialkoxysilan zugegeben oder der kolloidalen Kieselsäure vor der Vermischung mit dem Trialkoxysilan zugesetzt. Es können zur Einstellung des pH-Werts auch Puffersysteme eingestzt werden, beispielsweise ein Chlorwasserstoffsäure/Ammoniumchlorid- Puffer.

Katalysator d) wird zur Steigerung der Aushärtungsgeschwindigkeit zugesetzt. Geeignete Beispiele sind Tetraalkylammoniumsalze organischer Säuren wie Tetrabutylammoniumacetat oder Tetrabutylammoniumformiat, Lewissäuren wie Aluminiumchlorid, Natriumacetat, organische Borsäureester wie Methylborat oder Ethylborat, Titanate wie Tetraisopropoxytitanat, Metallacetylacetonate wie Aluminiumacetylacetonat oder Titanacetylacetonat. Ausgangskomponente c) und d) sind fakultativ.

Die Herstellung der erfindungsgemäßen Beschichtungsmaterialien erfolgt bei Temperaturen von 10 bis 40°C, bevorzugt bei Temperaturen von 20 bis 30°C. Üblicherweise erfolgt die Hydrolyse der verwendeten Silane im Verlauf mehrerer Stunden unter Zusatz der genannten Komponenten. Dabei ist zu berücksichtigen, dass die Reaktions- bzw. Hydrolysegeschwindigkeit abhängig ist von der Art der eingesetzten Alkoxyverbindung. Am schnellsten reagieren Methoxysilane, etwas langsamer Ethoxy- und Propoxysilanen. Die Zugabe eines Alkohols erfolgt normalerweise direkt zum Reaktionsansatz zur Regelung der Kondensation und zur Stabilisierung des entstehenden Sols.

Die nach der Umsetzung erhaltene Zusammensetzung enthält normalerweise etwa 10 bis etwa 50 Gew.-% Festsubstanz, wobei diese zu etwa 10 bis 70 Gew.-% aus kolloidalem Siliziumdioxid und etwa 30 bis 90 Gew.-% Silanol-Teilkondensat bzw Siloxanol besteht. Das Silanol-Teilkondensat entsteht vorzugsweise durch Kondensation von Monomethyltrisilanol, jedoch kann es auch durch Co-Kondensation von Monomethyltrisilanol mit Monoethyltrisilanol, Monopropyltrisilanol, Monovinyltrisilanol, Mοηο-γ-methacryloxy-propyltrisilanol, Mοnο-γ-glycidoxypropyltrisilanol oder Mischungen daraus erhalten werden.

Das Teilkondensat wird in situ durch Zusatz des entsprechenden Trialkoxysilans zur wässrigen kolloidalen Dispersion des Siliziumdioxids gebildet. Geeignete Trialkoxysilane sind solche, die Methoxy-, Ethoxy-, Isopropoxy- und sek.-Butoxy- Substituenten enthalten. Nachfolgend auf die Bildung des Silanols in der sauren wässrigen Lösung erfolgt die Kondensation der Hydroxyl-Substituenten unter Bildung von Si-O-Si-Bindungen. Die Kondensation verläuft nicht vollständig. Es verbleibt eine gewisse Menge an Silizium-gebundenen Hydroxylgruppen, die das gebildete Organopolysiloxan in Lösung des wässrig-alkoholischen Mediums halten. Dieses lösliche Teilkondensat kann als Siloxanol-Polymer mit wenigstens einer an Silizium gebundenen Hydroxylgruppe pro drei SiO-Einheiten charakterisiert werden.

Wahrend des Härtungsprozesses der Antiadhäsiv-Beschichtung kondensieren diese verbleibenden Hydroxylgruppen, um ein Silsesquioxan der Formel R-SiO_{3/2} zu bilden.

Die erfindungsgemäßen Beschichtungen können durch thermische oder photochemische (UV-) Behandlung ausgehärtet werden, wobei die jeweilige Methode von der Natur der Beschichtung und/oder den vor Ort gegebenen technischen Randbedingungen abhangt.

Die erfindungsgemäßen Beschichtungen können auf alle gängigen Formwerkzeugmaterialien, wie z.B. Stahl, Aluminium, Kunststoffe etc. aufgebracht werden. Bevorzugte Formenmaterialien sind beispielsweise die hochfeste Aluminiumlegierung AlZnMgCu 1.5, Type 3.4365, der unlegierte Werkzeugstahl C 45, Type 1.1730, der korrosionsfeste Durchhärtestahl X 42, Type 1.2083 oder andere für den Wekzeugbau eingesetzte Stahlsorten. Je nach Formwerkzeugmaterial kann eine gesonderte Reinigung und Vorbehandlung der Oberfläche, z.B. durch Auftrag geeigneter Primer notwendig sein.

Als Primer können z.B. 1 %ige alkoholische Lösungen der Teilhydrolysate von organofunktionellen Silanen wie beispielsweise Vinyltrimethoxysilan, Vinyltriethoxysilan, γ-Glycidoxypropyl-trimethoxysilan, γ-Methacryloxypropyl-trimethoxysilan, γ-Glycidoxypropyl-triacetoxysilan, Tris-(glycidoxypropyl)methoxysilan, γ-Aminopropyl-trimethoxysilan, γ-Aminopropyl-triethoxysilan sowie Mischungen hieraus verwendet werden. Bevorzugt werden γ-Glycidoxypropyl-trimethoxysilan oder γ-Aminopropyltrimethoxysilan als Primer eingesetzt.

Hierzu werden die Silane in der Regel in Alkohol, wie zum Beispiel Methanol und Ethanol, wie oben beschrieben oder einem anderen polaren Lösungmittel gelöst und in dünner Schicht mit dem Pinsel auf die gereinigte Form aufgetragen oder mit einer Sprühvorrichtung aufgesprüht und anschließend bei Raumtemperatur abgelüftet. Andere geeignete Alkohole sind Isopropanol, n-Butanol und Isobutanol.

Es ist vorteilhaft aber nicht notwendig, den aufgetrockneten Primer bei milden Temperaturen, z.B. bei 60 bis 90°C, über einen Zeitraum von 15 bis 30 Minuten zu tempern, um eine besonders gute Haftung der nachfolgend aufgetragenen Beschichtung auf dem Untergrundmaterial zu gewährleisten.

Die erfindungsgemäßen beschichteten Formwerkzeuge können bei der Herstellung von Formteilen aus verschiedensten thermo- und duroplastischen Kunststoffen eingesetzt werden. Beispiele sind Polyethylen, Polypropylen, PVC oder Polyurethan. Besondere Vorteile zeigen sich bei der Herstellung von Formteilen aus Polyurethan, insbesondere Polyurethanschaum, ganz besonders Polyurethanweichschaum.

### Beispiele

### Beispiel 1 Herstellung einer Organosilsesquioxan-Beschichtungslösung

19,8 g Eisessig, 210 g destilliertes Wasser und 227 g Isopropanol werden zu 300 g kolloidaler Kieselsäure mit einem SiO₂-Gehalt von 30 Gew.-% gegeben. Nach gründlicher Durchmischung der Komponenten werden 900 g Methyltriethoxysilan zugesetzt und die Mischung unter Rühren auf 60 °C erwärmt. Sie wird bei dieser Temperatur für 4 Stunden belassen; danach werden weitere 1200 g Isopropanol zu der Mischung zugegeben. Nach Abkühlung auf Raumtemperatur wird die Lösung filtriert. Die so hergestellte schwach opake, kolloidale Lösung wird als Beschichtungsmittel in den Beispielen 4 und 6 eingesetzt.

### Beispiel 2 Herstellung einer Organosilsesquioxan-Beschichtungslösung

250 g Methyltrimethoxysilan, 160 g kolloidale Kieselsäure mit einem SiO₂-Gehalt von 30 Gew.-%, 40 g Wasser und 1,5 g Essigsäure werden in einem Reaktionsgefäß gemischt und anschließend eine Mischung von 250 g n-Butanol und 250 g Isobutanol zugegeben. Diese Mischung wird bei Raumtemperatur 16 h lang gerührt und anschließend filtriert. Die so hergestellte schwach opake, kolloidale Lösung wurde als Beschichtungsmittel in den Beispielen 4 und 6 eingesetzt.

### Beispiel 3 Vergleichsbeispiel; Anwendung herkömmlicher Trennmittel

Es wurden Formteile aus einem handelsüblichen Standard-Weichformschaumsystem (Bayfit® VP.PU 20SA71 / Desmodur® VP.PU 70SA69, Bayer AG) hergestellt. Die Innenwand einer Laborform und die verwendeten Einlegeteile (übliche Laborform aus Aluminiumplatten und Stahlrahmen mit Aluminium-Einlegeteilen (200 x 200 x 40 mm) wurde vor jedem Eintrag des flüssigen PUR-Reaktionsgemisches mit einer handelsüblichen mit Wachs oder einer handelsüblichen Trennmittelpaste (P 180-52, Acmos-Chemie GmbH & Co., D-28199 Bremen) behandelt, um eine einwandfreie Entformung des Formkörpers nach der Herstellung zu gewährleisten.

Wenn die Form nicht vor jeder Formteilherstellung entsprechend behandelt wurde, hafteten nach der zweiten oder dritten Entformung die PUR-Formteile zunächst partiell und nach weiteren Entformungen großflächig an der Laborform. Bei den ersten Entformungen blieben dann zunächst kleinere Formteil-Oberflachenpartikel an der Laborformoberfläche zurück. Bei weiteren Entformungen trat eine derart starke Haftung auf, dass eine zerstörungsfreie Entnahme des Formteils nicht mehr möglich war.

### Beispiel 4 Herstellung einer erfindungsgemäßen Beschichtung

Die in Beispiel 3 verwendete Laborform wurde von anhaftenden Rückständen durch Sandstrahlen befreit und mit dem erfindungsgemäßen Beschichtungsmittel nach Beispiel 1 durch Auftragen mit dem Pinsel beschichtet. Das Lösemittel wurde durch 10minütiges offenes Stehen bei Raumtemperatur abgelüftet und die Beschichtung anschließend durch Erwärmen in einem Wärmeofen bei 130°C über 20 Minuten ausgehärtet. Die so vorbereitete Form wurde zur Herstellung von Formteilen eingesetzt. Eine gesonderte Aufbringung von Trennmittel wurde nicht durchgeführt. Über einen Zeitraum von mehreren Tagen wurden Formteile hergestellt. Jedes Formteil konnte ohne Probleme, rückstands- und zerstörungsfrei entnommen wer den.

### Beispiel 5 Vergleichsbeispiel: Anwendung herkömmlicher Trennmittel

Die Innenwand eines Aluminiumformwerkzeuges zur Herstellung von Stirnwanddämmungen im Automobil bereich wurde vor jedem Eintrag des flüssigen PUR-Reaktionsgemisches mit einer handelsüblichen Trennmittellösung behandelt, um eine einwandfreie Entformung des Formkörpers nach der Herstellung zu gewährleisten. Wenn die Form nicht vor jeder Formteilherstellung entsprechend behandelt wurde, hafteten nach der zweiten oder dritten Entformung die PUR-Formteile zunächst partiell und nach weiteren Entformungen großflächig an der Formoberfläche. Bei den ersten Entformungen blieben dann zunächst kleinere Formteilpartikel an der Formoberfläche zurück. Bei weiteren Entformungen trat eine derart starke Haftung auf, dass eine zerstörungsfreie Entnahme des Formteils nicht mehr möglich war.

### Beispiel 6 Herstellung einer Organosilsesquioxan-Beschichtung

Zu 200 g einer kommerziell erhältlichen kolloidalen Dispersion von Siliziumdioxid mit einem pH-Wert von 3,1 und einem SiO₂-Gehalt von 34 Gew.-% und einer Teilchengröße von ungefähr 15 Nanometern sowie einem Na₂O-Gehalt von weniger als 0,01 Gew.-% wurden 0,2 g Eisessig gegeben. 138 g Methyltrimethoxysilan wurden zugesetzt und gerührt. Hierbei wurden Methanol und Methyltrisilanol gebildet. Nach etwa 1 Stunde stabilisierte sich der pH-Wert bei 4,5. Das Reaktionsgemisch wurde weitere 4 Tage stehen gelassen, um die Bildung des Teilkondensates in der Kieselsol-Wasser-Methanol-Mischung zu gewährleisten. Diese Mischung enthielt 40 Gew.-% Feststoffe, wovon 50 Gew.-% aus SiO₂ und die andere Hälfte aus Methylsilsesquioxan bestand.

Das in Beispiel 5 verwendete Aluminiumformwerkzeug wurde von anhaftenden Rückständen durch Sandstrahlen befreit und durch Einsprühen mit der Beschichtungslösung der erfindungsgemäßen Zusammensetzung nach Beispiel 2 auf den Kontaktflächen zum PU-Schaum beschichtet. Anschließend wurde die Form auf 90°C über 1 h beheizt. Danach wurde die Form zur Herstellung von PUR-Formschaumteilen verwendet- Über einen Zeitraum von 2 Tagen wurden täglich 15 Formteile hergestellt. Jedes Formteil konnte ohne Probleme, rückstands- und zerstörungsfrei entnommen werden.

**Ergebnisse**

| Beispiel | **Verwendung von** | | Zahl problemloser Entformungen |
|---|---|---|---|
| | Trennmittel | Beschichtung | |
| 3 | + | - | 2-3* |
| 4 | - | + | 55 |
| 5 | + | - | 2 |
| 6 | - | + | 30 |

| | | | |
|---|---|---|---|
| * PU-Partikel haften bei der 2. Entformung und führen bei der 3. Entformung zur flächigen Zerstörung des Formteils. | | | |

## Patentansprüche

1. Formwerkzeug, das eine Antiadhäsiv-Beschichtung auf Basis organomodifizierter nanoskaliger SiO₂-Teilchen aufweist, erhältlich
(1) durch Umsetzung von
a) kolloidalen Siliziumdioxid-Lösungen mit einer mittleren Teilchengröße von 5 bis 150 Nanometern Durchmesser,
b) organofunktionellen Trialkoxysilanen der allgemeinen Formel R'-Si(OR)₃, worin R' einen, gegebenenfalls fluorierten, Alkylsubstituenten mit 1 bis 6 Kohlenstoffatomen, Vinyl-, Acryloyl-, Methacryloyl-, γ-Glycidoxypropyl-oder γ-Methacryloxypropyl-Substituenten bedeutet und R ein Alkylsubstituent mit 1 bis 8 Kohlenstoffatomen ist,
wobei Ausgangskomponente b) zu mindestens 70 Gew.-% aus Trialkoxyalkylsilan besteht,
ein Beschichtungsmittel hergestellt wird,
(2) Auftragen des so hergestellten Beschichtungsmittel auf die Oberfläche eines Formwerkzeugs aus Metall oder Kunststoff, und
(3) Aushärtung der in Schritt (2) erzeugten Beschichtung.

2. Formwerkzeug nach Anspruch 1, worin das Trialkoxyalkylsilan, ausgewählt wird aus Trialkoxymethylsilan, Trialkoxyethylsilan und Trialkoxypropylsilan.

3. Formwerkzeug nach Anspruch 1 oder 2, worin die Antiadhäsiv-Beschichtung auf Basis organomodifizierter nanoskaliger SiO₂-Teilchen erhältlich ist durch Umsetzung der Komponenten a) und b) wie im Anspruch 1 definiert, sowie
c) den pH-Wert regulierenden Zusätzen, ausgewählt aus anorganischen oder organische Säuren,
d) einem Katalysator zur Steigerung der Aushärtungsgeschwindigkeit.

4. Verfahren zur Herstellung eines Formwerkzeugs gemäß Anspruch 1 oder 2, bei dem ein durch Umsetzung der Komponenten a) und b), wie im Anspruch 1 definiert, hergestelltes Beschichtungsmittel auf die Oberfläche eines Formwerkzeugs aus Metall oder Kunststoff aufgetragen und ausgehärtet wird.

5. Verwendung eines Formwerkzeugs gemäß Anspruch 1 zur Herstellung von Formteilen aus Kunststoff.

## Claims

1. Forming tool having an anti-adhesive coating based on organomodified nano-scaled SiO₂-particles, obtainable by
(1) preparing of a coating agent by reaction of
a) solutions of colloidal silicon dioxide with an average particle size of a diameter of 5 to 150 nanometers,
b) organofunctional trialkoxysilanes of the general formula R'-Si(OR)₃, wherein R' represents an alkyl substituent, which is optionally fluorinated, with 1 to 6 carbon atoms, a vinyl, acryloyl, methacryloyl, γ-glycidoxypropyl or γ-methacryloxypropyl substituent and R is an alkyl substituent with 1 to 8 carbon atoms,
wherein at least 70 weight-% of the starting component b) consist of a trialkoxysilane,
(2) applying thus prepared coating agent to the surface of a metal or plastic forming tool, and
(3) curing the coating prepared in step (2).

2. Forming tool according to claim 1, wherein the trialkoxysilane is selected from trialkoxymethylsilane, trialkoxyethylsilane and trialkoxypropylsilane.

3. Forming tool according to claim 1 or 2, wherein the anti-adhesive coating based on organomodified nano-scaled SiO₂-particles is obtainable by reaction of the components a) and b) as defined in claim 1, and further
c) additives regulating the pH value, selected from inorganic or organic acids,
d) a catalyst for increasing the curing rate.

4. Process for the production of a forming tool according to claim 1 or 2, wherein a coating agent prepared by a reaction of the components a) and b) as defined in claim 1 is applied to the surface of a metal or plastic forming tool and cured.

5. Use of a forming tool according to claim 1 for the production of plastic moulded parts.

## Revendications

1. Outil de moulage, qui présente un revêtement anti-adhésif à base de particules de SiO₂ organomodifiées de l'ordre du nanomètre, pouvant être obtenu
(1) par préparation d'un agent de revêtement par la mise en réaction
a) de solutions de dioxyde de silicium colloïdales avec une granulométrie moyenne de 5 à 150 nanomètres de diamètre,
b) de trialcoxysilanes organofonctionnels de la formule générale R'-Si(OR)₃ dans laquelle R' représente un substituant aryle éventuellement fluoré avec 1 à 6 atomes de carbone, des substituants vinyle, acryloyle, méthacryloyle, γ-glycidoxypropyle ou γ-méthacryloxypropyle et R est un substituant alkyle avec 1 à 8 atomes de carbone,
dans lequel des composants de départ b) sont constitués d'au moins 70 % de trialcoxyalkylsilane,
(2) par l'application de l'agent de revêtement ainsi fabriqué sur la surface d'un outil de moulage composé de métal ou de matière plastique, et
(3) par le durcissement du revêtement généré lors de l'étape (2).

2. Outil de moulage selon la revendication 1, dans lequel le trialcoxyalkylsilane est choisi parmi le trialcoxyméthylsilane, le trialcoxyéthylsilane et le trialcoxypropylsilane.

3. Outil de moulage selon la revendication 1 ou 2, dans lequel le revêtement antiadhésif à base de particules de SiO₂ organomodifiées de l'ordre du nanomètre peut être obtenu par la mise en réaction des composants a) et b) tels que définis dans la revendication 1, ainsi que
c) d'additifs régulant la valeur pH, choisis parmi des acides inorganiques ou organiques,
d) d'un catalyseur servant à augmenter la vitesse de durcissement.

4. Procédé servant à fabriquer un outil de moulage selon la revendication 1 ou 2, dans lequel un agent de revêtement fabriqué par la mise en réaction des composants a) et b), tels que définis dans la revendication 1, est appliqué sur la surface d'un outil de moulage composé de métal et de matière plastique et est durci.

5. Utilisation d'un outil de moulage selon la revendication 1 servant à fabriquer des pièces moulées en matière plastique.
